**Europäisches Patentamt**

**European Patent Office**

**Office européen des brevets**

(19)

(11) Veröffentlichungsnummer: **0 036 448 B1**

(12)

# EUROPÄISCHE PATENTSCHRIFT

(45) Veröffentlichungstag der Patentschrift: **15.06.83**

(21) Anmeldenummer: **80107897.3**

(22) Anmeldetag: **13.12.80**

(51) Int. Cl.³: **B 60 J 3/00**, B 60 J 3/02

(54) **Sonnenblende, insbesondere für Fahrzeuge.**

(30) Priorität: **22.03.80 DE 3011158**

(43) Veröffentlichungstag der Anmeldung:
**30.09.81 Patentblatt 81/39**

(45) Bekanntmachung des Hinweises auf die Patenterteilung:
**15.06.83 Patentblatt 83/24**

(84) Benannte Vertragsstaaten:
**DE FR GB IT SE**

(56) Entgegenhaltungen:
**DE-A-2 220 711**
**FR-A-2 365 454**
**GB-A-1 039 241**

(73) Patentinhaber: **Gebr. Happich GmbH,**
**Postfach 10 02 49 Clausenbrücke 1,**
**D-5600 Wuppertal 1 (DE)**

(72) Erfinder: **Cziptschirsch, Kurt, Am Heckendorn 43,**
**D-5600 Wuppertal 2 (DE)**
Erfinder: **Zwirner, Gerhard, Bachstrasse 120,**
**D-5657 Haan (DE)**
Erfinder: **Kaiser, Klaus-Peter, Sellscheid 42,**
**D-5632 Wermelskirchen (DE)**

## Sonnenblende, insbesondere für Fahrzeuge

Die Erfindung bezieht sich auf eine Sonnenblende der im Oberbegriff des Anspruchs 1 angegebenen und aus Fig. 3 der FR-A-2 365 454 bekanntgewordenen Art.

Sonnenblenden der gattungsgemäßen Art sind in verschiedenen Ausführungsformen bekannt. So zeigt das DE-U-7 423 932 eine Sonnenblende mit einem in einer Ausnehmung des Sonnenblendenkörpers eingesetzten Spiegel, der am außenseitigen Randbereich umlaufend von dem Randbereich einer fensterartigen Öffnung der den Sonnenblendenkörper umgebenden Hüllfolie übergriffen und mit diesem verklebt ist.

Eine andere bekannte Sonnenblende (DE-U-7 900 312) sieht vor, einen Spiegel in einen Rahmen einzusetzen, den Rahmen mit Spiegel in einer Ausnehmung des Sonnenblendenkörpers anzuordnen und den Randbereich einer fensterartigen Öffnung der den Sonnenblendenkörper umgebenden Hüllfolie mit einem umlaufenden Flansch des Rahmens zu verschweißen. Dabei ist noch, zwecks Abdeckung der Schweißnaht, auf dem Spiegelrahmen ein zusätzlicher Außenrahmen angeordnet.

Durch die DE-A-2 619 844 ist eine Sonnenblende mit einem in eine hinterschnittene Ausnehmung des Sonnenblendenkörpers eingeklipster Spiegel bekannt, wobei es möglich ist, die Randbereiche einer fensterartigen Öffnung der den Sonnenblendenkörper umgebenden Hüllfolie in die Ausnehmung mit einzuziehen.

Es sind auch Sonnenblenden mit beleuchtbaren bzw. hinterleuchtbaren Spiegeln, zum Beispiel DE-U-7 921 916 oder DE-U-7 721 483, bekannt, wobei jeweils der Spiegel zusammen mit einem ihn tragenden Rahmen in ein mit Lichtquellen ausgerüstetes Gehäuse eingesetzt ist, welches seinerseits in einer Ausnehmung des Sonnenblendenkörpers befestigt ist. Auch bei diesen bekannten Sonnenblenden ist der Sonnenblendenkörper jeweils von einer Hüllfolie umgeben, die im Spiegelbereich eine festerartige Öffnung aufweist, deren Randbereich mit dem Gehäuse oder Spiegelrahmen durch Kleben oder Schweißen verbunden ist.

Es ist somit allen vorgenannten Sonnenblenden gemeinsam, die den Sonnenblendenkörper umgebende Hüllfolie im Spiegelbereich mit fensterartigen Öffnungen auszubilden und die die Öffnungen begrenzenden Ränder an den Spiegeln und/oder Spiegelrahmen zu befestigen. Dies bereitet in der Praxis oftmals erhebliche Schwierigkeiten, denn es ist aus ästhetischen Gründen erforderlich, daß sowohl die Öffnungsränder als auch die Befestigungsnähte sehr sorgfältig und sauber ausgebildet werden. Aber auch bei sehr sorgfältiger Arbeit, die einen relativ hohen Zeit- und Kostenaufwand bedeutet, lassen sich Unsauberkeiten nicht grundsätzlich ausschließen. Auch kann man bei vielen Sonnenblenden herkömmlicher Art einen ungeraden Verlauf der Schweißnaht der Hüllfolie, die an der Schmalkante des Sonnenblendenkörpers umlaufend vorgesehen ist, feststellen, die zu Beanstandungen Anlaß geben kann. Dieser ungerade Verlauf der Schweißnaht ist darauf zurückzuführen, daß die Hüllfolie, die den Sonnenblendenkörper strammsitzend umgibt, durch die fensterartige Öffnung bereichsweise geschwächt ist, so daß sich die Hüllfolie und damit die Schweißnaht verziehen kann.

Von den Sonnenblenden der vorgenannten Art unterscheidet sich die in Fig. 3 FR-A-2 365 454 gezeigte Sonnenblende insofern, als der Sonnenblendenkörper hier an einer Breitseite eine Ausnehmung aufweist, in die die den Sonnenblendenkörper umgebende Hüllfolie eingezogen ist. Um das Einziehen der Hüllfolie in die relativ flache Ausnehmung zu ermöglichen, ist mit dem den Sonnenblendenkörper aussteifenden Rahmen eine Platte aus Metall oder Fasermaterial verbunden und der seinerseits mit einem Überzug versehene Spiegel ist mittels Nieten oder anderen Befestigungsmitteln an der Platte festgelegt, wobei nicht ohne weiteres erkennbar ist, wie die Festlegung im einzelnen erfolgen soll.

Es ist nun Aufgabe der Erfindung, eine Sonnenblende der eingangs genannten Art in der Herstellung, insbesondere in bezug auf das Einziehen der Hüllfolie in die Ausnehmung des Sonnenblendenkörpers zu vereinfachen und gleichzeitig im Qualitätsniveau zu verbessern.

Diese Aufgabe wird erfindungsgemäß durch die im Kennzeichenteil des Patentanspruchs 1 angegebenen Merkmale gelöst.

Zufolge der erfindungsgemäßen Maßnahme entfällt das Einstanzen einer fensterartigen Öffnung in die Hüllfolie ebenso wie das bisher erforderliche Verschweißen oder Verkleben der die Öffnung begrenzenden Randbereiche. Neben der Einsparung von Arbeitsschritten und Arbeitszeit entfällt auch die Beachtung sauberer Schnittkanten und Klebe- oder Schweißnähte. Damit läßt sich die Sonnenblende, insgesamt gesehen, schnell und einfach, insbesondere auch preisgünstig und mit hohem Qualitätsniveau herstellen.

Dadurch, daß gemäß der Erfindung die Hüllfolie im Überdeckungsbereich der Ausnehmung mit einer gegenüber ihren anderen Bereichen wesentlich erhöhten Elastizität ausgebildet ist, ist es möglich, den Sonnenblendenkörper in gewohnter Weise herzustellen und mit einer, allerdings ohne fensterartige Öffnung ausgebildeten Hüllfolie zu umgeben. Durch Einstecken des Spiegels, der auch mit einem Rahmen versehen und/oder mit einem Gehäuse kombiniert sein kann, in die Ausnehmung des Sonnenblendenkörpers wird die Hüllfolie aufgrund der partiell vorgesehenen erhöhten Elastizität mit in die Ausnehmung eingezogen und schmiegt sich an die Ausnehmungswandungen an.

Alternativ kann das erleichterte Einziehen der Hüllfolie in die Ausnehmung gemäß der Erfindung vorzugsweise dadurch erreicht werden, daß die Hüllfolie im Überdeckungsbereich der Ausnehmung netzartig ausgebildet ist. Wenn man davon ausgeht, daß die Hüllfolie auch im netzartigen Bereich materialeinheitlich ist, so liegt im netzartigen Bereich eine Flächenreduzierung vor, wodurch dieser Bereich verständlicherweise mit geringerem Kraftaufwand gedehnt werden kann als solche in der Fläche ungeschwächten Bereiche.

Mit Vorteil kann die netzartige Ausbildung aus zwischen Stanzlöchern verbleibenden Folienstreifen bestehen. Die Herstellung der netzartigen Ausbildung kann somit in einfacher Weise mittels eines Stanzstempels oder bei Kunststofffolien mittels einer Elektrode erfolgen.

Der Öffnungsquerschnitt der Stanzlöcher kann den jeweiligen Gegebenheiten angepaßt und durch wenige Versuche ermittelt werden. Es hat sich als vorteilhaft erwiesen, Stanzlöcher vorzusehen, deren Öffnungsquerschnitt kreisförmig oder polygonal ist. Weiterhin haben sich Öffnungserweiterungen der Stanzlöcher im Bereich der Ausnehmungsecken als vorteilhaft erwiesen, weil sie, insbesondere bei tieferen Ausnehmungen, ein Einreißen der Hüllfolie wirksam verhindern.

Schließlich ist es bei Hüllfolien, die in besonders tiefe Ausnehmungen eines Sonnenblendenkörpers eingebracht werden sollen und/oder bei Hüllfolien mit nur geringer Elastizität von Vorteil, wenn nach einem weiteren Merkmal der Erfindung vorgesehen wird, daß die zwischen den Stanzlöchern verbleibenden Folienstreifen zumindest teilweise einen zick-zackförmigen Verlauf aufweisen.

Die Befestigung des Spiegels wird durch die Erfindung in keiner Weise erschwert, insbesondere auch dann nicht, wenn er mit einem Rahmen, einer Spiegelklappe oder mit einem Gehäuse kombiniert ist, in dem Lichtquellen zu seiner Beleuchtung untergebracht sind. So ist es beispielsweise möglich, ein Gehäuse mit sich im Sonnenblendenkörper verankernden Dübeln auszubilden. Auch können auf dem Boden der Ausnehmung im Sonnenblendenkörper Klebepunkte aufgebracht werden und der Spiegel oder das Gehäuse durch Kleben befestigt werden. Es ist weiterhin möglich, die Ausnehmungsränder hinterschnitten auszubilden, so daß der Spiegel, ein Spiegelrahmen oder ein Gehäuse durch einfaches Einklipsen zu befestigen sind. Durch die vorzugsweise im Ausnehmungsbereich vorgesehene Netzstruktur der Hüllfolie wird auch ein Austritt elektrischer Leiter begünstigt, so daß die erfindungsgemäße Sonnenblende auch mit Spiegeln ausgerüstet werden kann, denen eine im Sonnenblendenkörper untergebrachte Leuchtquelle zugeordnet ist.

Im folgenden wird die Erfindung anhand von auf der Zeichnung dargestellten Ausführungsbeispielen näher erläutert. Es zeigt

Fig. 1 eine komplette Sonnenblende in Ansicht,

Fig. 2 einen Schnitt, etwa folgend der Linie A-A in Fig. 1,

Fig. 3 einen Vertikalschnitt durch eine zweite Ausbildungsform einer Sonnenblende,

Fig. 4 einen Vertikalschnitt durch eine dritte Ausbildungsform einer Sonnenblende und

Fig. 5 bis 8 je einen Hüllfolienabschnitt im Überdeckungsbereich der Sonnenblendenkörper-Ausnehmung.

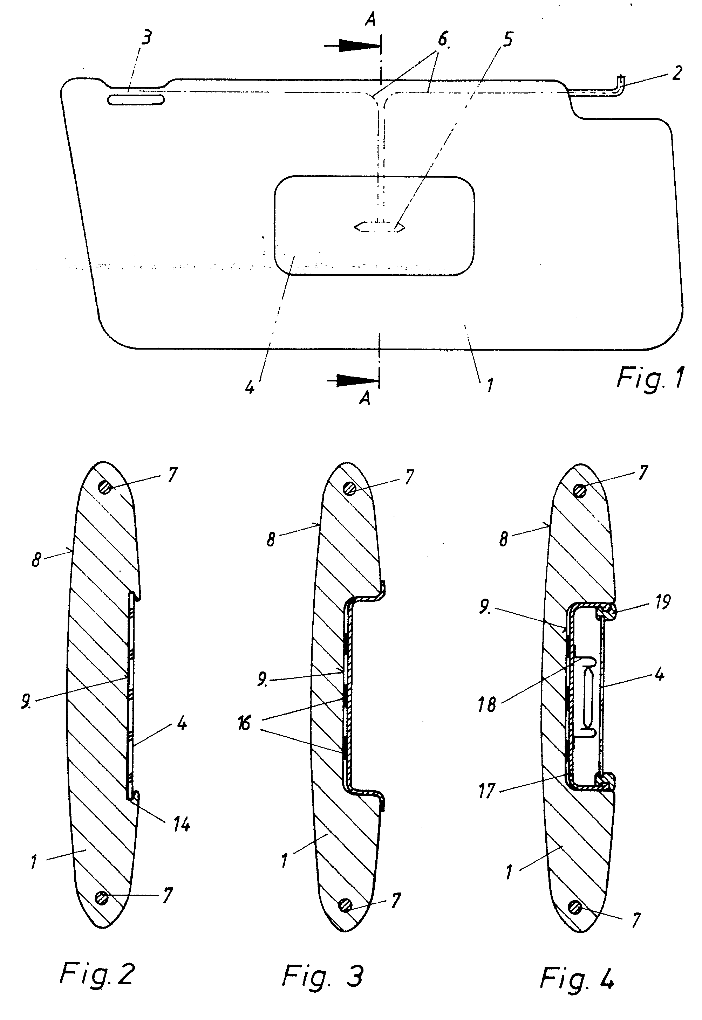

Fig. 1 zeigt eine Sonnenblende, bestehend aus einem Sonnenblendenkörper 1, der an seiner oberen Randkante einseitig eine Schwenklagerachse 2 und anderseitig eine Gegenlagerachse 3 aufweist. Ferner ist der Sonnenblendenkörper 1 mit einem Spiegel 4 bestückt. Mit strichpunktierten Linien ist in Fig. 1 noch eine zur Beleuchtung des Spiegels 4 dienende Lichtquelle 5 mit durch den Sonnenblendenkörper 1 geführten elektrischen Leitern 6, die in geeigneter Weise mit der Fahrzeugelektrik verbunden sind, angedeutet.

Wie die Querschnittsdarstellungen gemäß Fig. 2 bis 4 erkennen lassen, besteht der Sonnenblendenkörper 1 aus Schaumkunststoff und ist durch eine Verstärkungseinlage 7, die aus einem gebogenen Stahldrahtabschnitt bestehen kann, ausgesteift. Der Sonnenblendenkörper 1 ist mit einer Hüllfolie 8 umgeben, die im allgemeinen aus Kunststoff besteht, aber in besonderen Fällen auch aus Leder oder aus textilem Material gebildet sein kann.

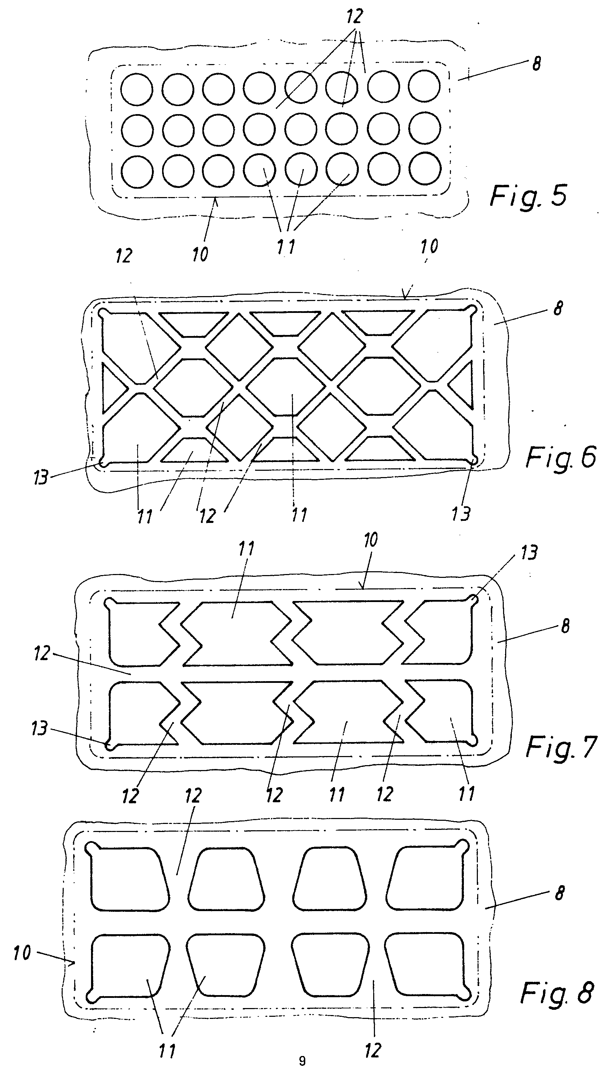

Der Sonnenblendenkörper 1 weist eine Ausnehmung 9 auf, die, wie Fig. 2 bis 4 erkennen lassen, unterschiedlich im Öffnungsquerschnitt und/oder in der Tiefe sein kann. Die Ausnehmung 9 wird vollständig von der Hüllfolie 8 mit überdeckt, derart, daß sie sich eng an die Ausnehmungswandungen anschmiegt. Das Einziehen der Hüllfolie 8 in die Ausnehmung 9 wird dadurch ermöglicht, daß die Hüllfolie im Überdeckungsbereich der Ausnehmung 9 eine wesentlich erhöhte Elastizität besitzt. Eine partiell erhöhte Elastizität der Hüllfolie 8 läßt sich zum Beispiel durch eine Netzstruktur erzielen, wie sie in Fig. 5 bis 8 beispielsweise dargestellt ist.

Fig. 5 zeigt einen Ausschnitt der Hüllfolie 8 mit strichpunktiert angedeutetem Überdeckungsbereich 10. Der Überdeckungsbereich 10 besitzt eine Netzstruktur, die gebildet ist durch Stanzlöcher 11 mit kreisrundem Öffnungsquerschnitt beziehungsweise durch die zwischen den Stanzlöchern 11 verbleibenden Folienstreifen 12. Durch die Netzstruktur besitzt der Überdeckungsbereich 10 eine Flächenreduzierung, so daß dieser Bereich leichter gedehnt und in die Ausnehmung 9 gezogen werden kann.

Fig. 6 zeigt einen Ausschnitt der Hüllfolie 8 mit strichpunktiert angedeutetem Überdeckungsbereich 10, der ebenfalls eine Netzstruktur aufweist. Hier sind Stanzlöcher 11 vorgesehen, deren Öffnungsquerschnitt polygonal ist. Hierdurch ergeben sich Folienstreifen 12, die sowohl in Längs- als auch in Querrichtung der Ausnehmung 9 zick-zack-förmig verlaufen. Somit ist eine Reckung der Folienstreifen 12 möglich, insbesondere auch dann, wenn das Material der Hüllfolie 8 nur geringe Elastizität besitzt. Die in den Eckbereichen des Überdeckungsbereiches 10 befindlichen Stanzlöcher 11 besitzen zu den Ecken gerichtete Öffnungserweiterungen 13, die einem Einreißen entgegenwirken.

Eine Fig. 6 ähnliche Ausbildung der Hüllfolie 8 im Überdeckungsbereich 10 zeigt Fig. 7. Hier sind die Folienstreifen 12, die sich in Querrichtung der Ausnehmung 9 erstrecken, zick-zack-förmig ausgebildet, während der in Längsrichtung der Ausnehmung 9 etwa mittig angeordnete Folienstreifen 12 einen geradlinigen Verlauf aufweist. Auch hier sind Öffnungserweiterungen 13 an den eckseitigen Stanzlöchern 11 vorgesehen.

Fig. 8 zeigt einen Hüllfolienausschnitt, der im Überdeckungsbereich 10 mit relativ großen Stanzlöchern 11 versehen ist, die so ausgebildet sind, daß sich die quer verlaufenden Folienstreifen 12 jeweils zur Mitte hin verjüngen.

Aufgrund der erläuterten netzartigen Struktur der Hüllfolie 8 im Überdeckungsbereich 10 kann sie ohne Mühe in die Ausnehmung 9 eingebracht werden. Dies kann insbesondere zusammen mit dem Eindrücken des Spiegels 4 erfolgen.

Fig. 2 zeigt eine Ausnehmung 9, die mit einer umlaufenden Hinterschneidung 14 ausgebildet ist. Der Spiegel 4 wird hier zusammen mit der Hüllfolie 8 in die Ausnehmung 9 eingedrückt und ist hiernach zuverlässig durch die ihn umgreifenden Hinterschneidungskanten gehalten.

Fig. 3 zeigt einen Sonnenblendenkörper 1 mit einer gegenüber Fig. 2 tiefer ausgebildeten Ausnehmung 9, in die zusammen mit der Hüllfolie 8 eine Wanne 15 eingedrückt ist. Die Wanne 15, die zur Aufnahme zum Beispiel einer aus Spiegel, Spiegelrahmen, Spiegelklappe und Spiegelbeleuchtung bestehenden Einbaueinheit ausgebildet ist, ist aus dem Boden der Ausnehmung 9 durch Kleben befestigt. Dazu werden Kleberstellen 16 auf den Boden der Ausnehmung 9 aufgebracht, die durch die Stanzlöcher 11 der Hüllfolie 8 hindurchtreten können und die Wanne 15 lediglich dagegen gedrückt.

Fig. 4 zeigt eine Ausbildungsform, bei der der Sonnenblendenkörper 1 mit einer verhältnismäßig tiefen Ausnehmung 9 ausgebildet ist, in die unter Einschluß der Hüllfolie 8 ein Spiegelgehäuse 17 eingedrückt und zum Beispiel über Kleberpunkte 16 festgelegt ist. Das Spiegelgehäuse nimmt eine zwischen Soffitten 18 angeordnete Lichtquelle 5 und einen mit Spiegel 4 bestückten Spiegelrahmen 19 auf.

**Patentansprüche**

1. Sonnenblende, insbesondere für Fahrzeuge, mit einem Sonnenblendenkörper (1) aus Schaumkunststoff, der eine von einer Breitseite ausgehende, zur Aufnahme eines Spiegels (4) dienende Ausnehmung (9) aufweist und der von einer Hüllfolie (8) umgeben ist, die auch die Ausnehmung (9) unter Anlage an deren Wandungen überdeckt, dadurch gekennzeichnet, daß die Hüllfolie (8) im Überdeckungsbereich (10) der Ausnehmung (9) eine gegenüber ihren anderen Bereichen wesentlich erhöhte Elastizität und/oder netzartige Ausbildung aufweist.

2. Sonnenblende nach Patentanspruch 1, dadurch gekennzeichnet, daß die netzartige Ausbildung aus zwischen Stanzlöchern (11) verbleibenden Folienstreifen (12) besteht.

3. Sonnenblende nach Patentanspruch 2, dadurch gekennzeichnet, daß der Öffnungsquerschnitt der Stanzlöcher (11) kreisförmig oder polygonal ist.

4. Sonnenblende nach Patentanspruch 2 oder 3, gekennzeichnet durch Öffnungserweiterungen (13) der Stanzlöcher (11) im Bereich der Ausnehmungsecken.

5. Sonnenblende nach einem oder mehreren der Patentansprüche 2 bis 4, dadurch gekennzeichnet, daß die zwischen den Stanzlöchern (11) verbleibenden Folienstreifen (12) zumindest teilweise einen zick-zack-förmigen Verlauf aufweisen.

**Claims**

1. A sun visor, particularly for a vehicle, the visor comprising an expanded plastics visor body (1) which is provided with a recess (9) issuing from one of its main surfaces and serving to accomodate a mirror (4) and which is surrounded by a foil wrapping (8) also covering the recess (9) in such a manner as to rest against the walls thereof, characterized in that the area (10) of the foil wrapping (8) covering the recess (9) has an elasticity substantially higher than that of its other areas and/or is made like a net.

2. A sun visor according to claim 1, characterized in that the net-like formation is made up of punched-out holes (11) and the foil strips (12) remaining between said holes.

3. A sun visor according to claim 2, characterized in that the cross-sectional area of the punched-out holes (11) is circular or polygonal.

4. A sun visor according to claim 2 or claim 3, characterized by extensions (13) of the cross-sectional areas of the punched-out holes (11) disposed in corner regions of the recess.

5. A sun visor according to any one or more of the claims 2 to 5, characterized in that at least some of the foil strips (12) remaining between the punched-out holes (11) extend in zig-zag formation.

**Revendications**

1. Pare-soleil, destiné en particulier à des véhicules, comprenant un corps de pare-soleil (1) en mousse plastique qui présente sur une de ses faces un évidement (9) destiné à recevoir un miroir (4) et qui est entouré d'une feuille de gainage (8) laquelle recouvre aussi l'évidement (9) en s'appliquant sur les parois de ce dernier, caractérisé en ce que la feuille de gainage (8) présente, dans la zone (10) où elle s'applique sur l'évidement (9), une élasticité largement plus grande que dans les autres parties, et/ou une conformation rériculée.

2. Pare-soleil selon la revendication 1, caractérisé en ce que la configuration réticulée de la feuille (8) est constituée par des bandes (12) subsistant entre des trous (11) découpés par étampage.

3. Pare-soleil selon la revendication 2, caractérisé en ce que la section d'ouverture des trous (11) est de forme circulaire ou polygonale.

4. Pare-soleil selon les revendications 2 ou 3, caractérisé en ce que les trous (11) proches des coins de l'évidement (9) sont prolongés par des encoches (13).

5. Pare-soleil selon une plusieurs des revendications 2 à 4, caractérisé en ce que les bandes de feuilles (12) subsistant entre les trous étampés (11) présentent une forme qui est au moins partiellement en zigzag.

Fig. 1

Fig. 2

Fig. 3

Fig. 4

Fig. 5

Fig. 6

Fig. 7

Fig. 8